# EUROPEAN PATENT APPLICATION

(11) **EP 4 601 100 A1**
(43) Date of publication of application: **13.08.2025**
(21) Application number: 23882837.0
(22) Date of filing: 26.07.2023
(51) Int. Cl.: H01M 50/383, H01M 50/24, H01M 50/178, H01M 10/613

(54) **BATTERY MODULE HAVING FIREWALL**

(30) Priority: 24.10.2022 KR 20220137610
(71) Applicant: SK On Co., Ltd., Seoul 03161 (KR)
(72) Inventor: DO, Won Seok, Daejeon 34124 (KR); GOO, Bon A, Daejeon 34124 (KR); PARK, Byung Jun, Daejeon 34124 (KR); PARK, Chan Ho, Daejeon 34124 (KR); SEOK, Jong Ho, Daejeon 34124 (KR)
(74) Representative: Prüfer & Partner mbB Patentanwälte · Rechtsanwälte
(86) International application number: PCT/KR2023/010850
(87) International publication number: WO 2024/090730

(57) **Abstract**

The present disclosure relates to a battery module. The battery module according to an embodiment of the present disclosure may include a plurality of cell assemblies, each including a plurality of battery cells connected in parallel with each other, and a firewall disposed between two adjacent cell assemblies among the plurality of cell assemblies.

## Description

### [Technical Field]

The embodiments of the present disclosure relate generally to a battery module. In particular, the present disclosure relates to a battery module which includes a firewall to minimize fire propagation in the event of a fire within a battery.

### [Background Art]

In the event of a fire in a battery module including a plurality of battery cells, a chain reaction of explosions may occur in the plurality of battery cells. To prevent fire propagation between the battery cells, a method of installing a firewall between the battery cells may be considered.

Installing a plurality of firewalls may increase the volume of the battery module, leading to higher costs. Therefore, a battery module structure capable of effectively preventing the fire propagation between the battery cells while minimizing the volume of the battery module is required.

### [Summary of Invention]

### [Problems to be Solved by Invention]

According to an aspect of the present disclosure, it is an embodiment to provide a battery module capable of minimizing the fire propagation due to parallel connection of battery cells.

According to an aspect of the present disclosure, it is another embodiment to provide a firewall that protects a specific battery cell and its adjacent battery cells from debris generated from the specific battery cell in the event of a fire within the battery module.

In addition, according to an aspect of the present disclosure, it is another embodiment to provide a firewall that also functions as a fixed casing for the battery cell.

### [Means for Solving Problems]

A battery module according to the present disclosure may include: a plurality of cell assemblies, each including a plurality of cell units connected in series with each other; and a firewall disposed between two adjacent cell assemblies among the plurality of cell assemblies, wherein each of the plurality of cell units may include a plurality of battery cells connected in parallel with each other.

### [Advantageous effects]

According to an embodiment of the present disclosure, a battery module capable of minimizing the fire propagation due to parallel connection of battery cells may be provided.

According to an embodiment of the present disclosure, a firewall that protects a specific battery cell and its adjacent battery cells from debris generated from the specific battery cell in the event of a fire within the battery module may be provided.

According to an embodiment of the present disclosure, a firewall that also functions as a fixed casing for the battery cell may be provided.

### [Brief Description of Drawings]

FIG. 1 is a plan view illustrating a battery module 10 according to an embodiment of the present disclosure (excluding a cover plate 400).
FIG. 2 is a side view illustrating the battery module 10 of FIG. 1 (excluding a side plate 300).
FIG. 3 is an exploded perspective view illustrating the battery cell 100 and a firewall 200 of FIG. 1.
FIG. 4 is an enlarged view illustrating part A in FIG. 3.
FIG. 5 is an enlarged view illustrating part B in FIG. 4.
FIG. 6 is a cross-sectional view illustrating the firewall 200 of FIG. 5 taken on line D-D'.
FIG. 7 is a view illustrating a second side plate 320 of FIG. 1.
FIG. 8 is an enlarged view illustrating part C in FIG. 7.
FIG. 9 is an enlarged view illustrating the other side (right) of FIG. 1.

### [Mode for Carrying out Invention]

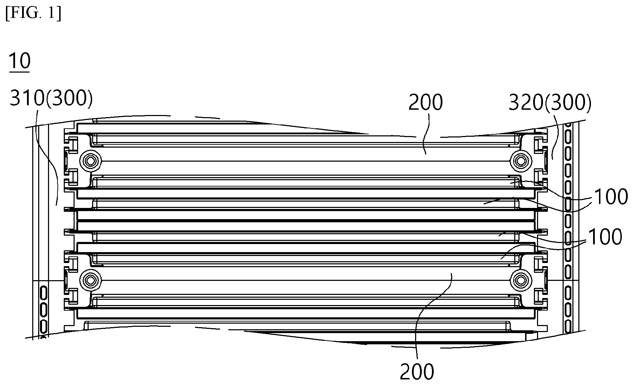

Hereinafter, the present disclosure will be described in detail with reference to FIGS. 1 to 9. However, these are merely illustrative and the present disclosure is not limited to the specific embodiments described by way of example.

FIG. 1 is a plan view illustrating a battery module 10 according to an embodiment of the present disclosure, excluding a cover plate 400.

The battery module 10 may include a battery cell 100. The battery module 10 may include a plurality of battery cells 100. The plurality of battery cells 100 may be stacked in one direction. For example, the plurality of battery cells 100 may be stacked while facing each other in a front-back direction. As used herein, the front-back direction may refer to a direction in which the plurality of battery cells 100 are stacked or arranged.

The battery module 10 may include a firewall 200. The battery module 10 may include a plurality of firewalls 200. The firewall 200 may be arranged between two adjacent battery cells 100 among the plurality of battery cells 100. The plurality of battery cells 100 may be arranged between two adjacent firewalls 200 among the plurality of firewalls 200. The number of battery cells 100 arranged between two adjacent firewalls 200 may be an even number.

The firewall 200 may be made of a plastic material. The firewall 200 may include a flame-retardant material. For example, the firewall 200 may include a material with a V-0 flame-retardant rating. For example, the firewall 200 may be made of polypropylene fiberglass.

The battery module 10 may include a side plate 300. The side plate 300 may include a first side plate 310 and a second side plate 320. The first side plate 310 may be arranged to face the second side plate 320.

The plurality of battery cells 100 and the plurality of firewalls 200 may be arranged between the first side plate 310 and the second side plate 320. For example, the first side plate 310 may be disposed on a left side of the plurality of battery cells 100 and the plurality of firewalls 200, and the second side plate 320 may be disposed on a right side of the plurality of battery cells 100 and the plurality of firewalls 200.

Each of the plurality of firewalls 200 may be coupled to the first side plate 310 and the second side plate 320. Each of the plurality of battery cells 100 may be inserted into the first side plate 310 and the second side plate 320. The plurality of battery cells 100 may be fixed and supported by the plurality of firewalls 200, the first side plate 310 and the second side plate 320.

The battery module 10 may further include a bus bar (not shown). The bus bar may be installed on an inner side of the first side plate 310 and an inner side of the second side plate 320, respectively, and connected to the plurality of battery cells 100.

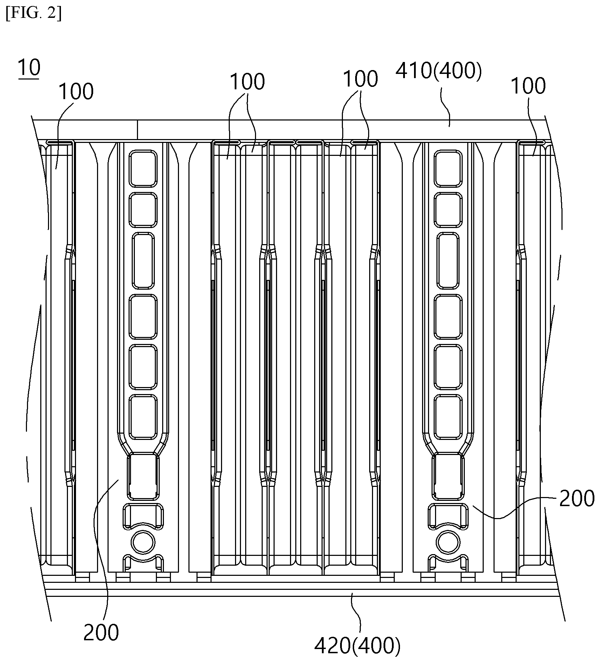

FIG. 2 is a side view illustrating the battery module 10 of FIG. 1, excluding the side plate 300.

The battery module 10 may include the cover plate 400. The cover plate 400 may include a first cover plate 410 and a second cover plate 420. The first cover plate 410 may be arranged to face the second cover plate 420.

The plurality of battery cells 100 and the plurality of firewalls 200 may be arranged between the first cover plate 410 and the second cover plate 420. For example, the first cover plate 410 may be disposed on an upper side of the plurality of battery cells 100 and the plurality of firewalls 200, and the second cover plate 420 may be disposed on a lower side of the plurality of battery cells 100 and the plurality of firewalls 200.

Each of the plurality of firewalls 200 may be in contact with the first cover plate 410 and the second cover plate 420. For example, an upper portion of the firewall 200 may be in close contact with the first cover plate 410. This prevents flames or debris from passing through the upper portion of the firewall 200 in the event of a fire within the battery module 10, thereby preventing the fire propagation.

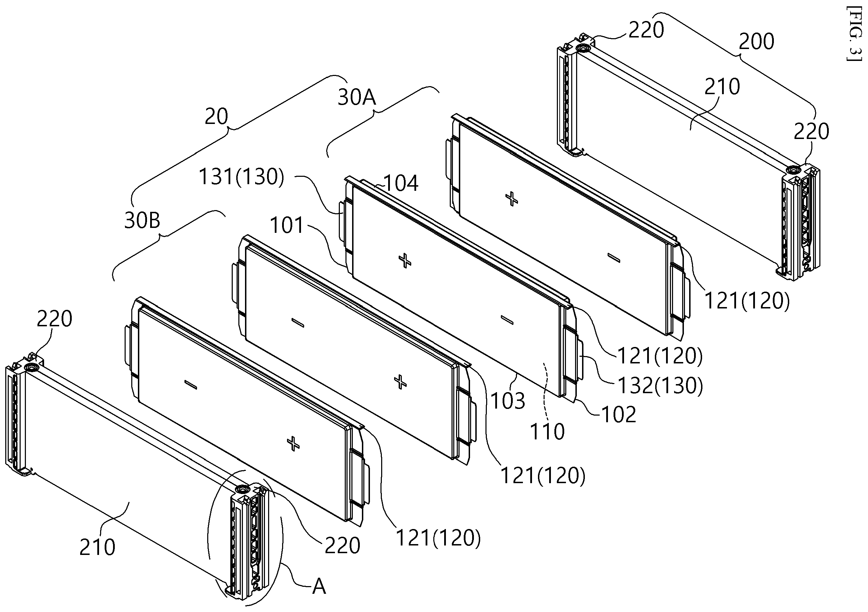

FIG. 3 is an exploded perspective view illustrating the battery cell 100 and the firewall 200 of FIG. 1.

The battery module 10 may include a cell assembly 20. The battery module 10 may include a plurality of cell assemblies 20. One cell assembly 20 of the plurality of cell assemblies 20 may be arranged between two adjacent firewalls 200 of the plurality of firewalls 200. The cell assemblies 20 and the firewalls 200 may be arranged alternately. The firewall 200 arranged between two adjacent cell assemblies 20 of the plurality of cell assemblies 20 may be referred to as a first firewall. The firewall 200 arranged on the outermost side of the plurality of cell assemblies 20 may be referred to as a second firewall.

The cell assembly 20 may include the plurality of battery cells 100. The plurality of battery cells 100 included in the cell assembly 20 may form one or a plurality of cell units 30A and 30B. The cell units 30A and 30B may include the plurality of battery cells 100 connected in parallel with each other. The plurality of cell units 30A and 30B may be connected in series with each other.

For example, the cell assembly 20 may include the plurality of cell units 30A and 30B connected in series with each other, and each of the plurality of cell units 30A and 30B may include the plurality of battery cells 100 connected in parallel with each other.

In this embodiment, the cell assembly 20 may include first and second cell units 30A and 30B. The cell units 30A and 30B may refer to at least one of the first cell unit 30A and the second cell unit 30B. The first and second cell units 30A and 30B may be stacked in one direction. A direction in which the first and second cell units 30A and 30B are stacked may correspond to a direction parallel to the direction in which the plurality of battery cells 100 are stacked. For example, the first and second cell units 30A and 30B may be stacked to face each other in the front-back direction.

Each of the first and second cell units 30A and 30B may include the plurality of battery cells 100. For example, each of the first and second cell units 30A and 30B may include two battery cells 100 connected in parallel with each other.

The battery cell 100 may be formed to extend from one end 101 to the other end 102. For example, the one end 101 of the battery cell 100 may correspond to a left end of the battery cell 100, and the other end 102 of the battery cell 100 may correspond to a right end of the battery cell 100. A length direction of the battery cell 100 may correspond to the left-right direction.

The battery cell 100 may include a lower end 103 and an upper end 104. The one end 101, the upper end 104, the other end 102 and the lower end 103 of the battery cell 100 may be sequentially connected to form a periphery of the battery cell 100. The battery cell 100 may have a width that is formed by extending from the lower end 103 to the upper end 104. The width direction of the battery cell 100 may correspond to the vertical direction.

A thickness direction of the battery cell 100 may correspond to the direction parallel to the direction in which the plurality of battery cells 100 are stacked. For example, the thickness direction of the battery cell 100 may correspond to a direction parallel to the front-back direction.

The battery cell 100 may include an electrode assembly 110 and an exterior material 120 that surrounds the electrode assembly 110. The exterior material 120 may include a sealing part 121 formed by contacting inner surfaces of the exterior material 120 with each other. The sealing part 121 may be formed along the periphery of the electrode assembly 110. For example, the sealing part 121 may be formed on one side, the other side, and an upper side of the electrode assembly 110. For example, the one side and the other side of the electrode assembly 110 may correspond to the left side and the right side of the electrode assembly 110, respectively.

The upper side of the sealing part 121 may be folded in a direction away from the firewall 200 adjacent to the sealing part 121. For example, based on the firewall 200, the sealing part 121 of the battery cell 100 adjacent to the front of the firewall 200 may be folded forward, while the sealing part 121 of the battery cell 100 adjacent to the rear of the firewall 200 may be folded rearward. As a result, the firewall 200 may be in close contact with the battery cell 100, such that flames and debris generated from the battery cell 100 may be effectively blocked in the event of a fire within the battery cell 100.

The battery cell 100 may include electrode tabs 130 coupled to one side and the other side of the electrode assembly 110, respectively. The electrode tabs 130 may be formed to protrude from the one side and the other side of the electrode assembly 110, respectively. The electrode tabs 130 may include a cathode tab 131 and an anode tab 132. The cathode tab 131 may be coupled to one of the one side and the other side of the electrode assembly 110, while the anode tab 132 may be coupled to the other of the one side and the other side of the electrode assembly 110.

The plurality of battery cells 100 included in each of the plurality of cell units 30A and 30B may be connected in parallel with each other. For example, in the plurality of battery cells 100 included in each of the plurality of cell units 30A and 30B, the cathode tabs 131 may be connected to face each other, and the anode tabs 132 may also be connected to face each other. In addition, the plurality of cell units 30A and 30B may be connected in series with each other. For example, the cathode tab 131 of the first cell unit 30A may be connected to face the anode tab 132 of the second cell unit 30B, while the anode tab 132 of the first cell unit 30A may be connected to face the cathode tab 131 of the second cell unit 30B.

For example, the plurality of battery cells 100 included in the first cell unit 30A may include the cathode tabs 131 positioned on the left side of the first cell unit 30A and the anode tabs 132 positioned on the right side of the first cell unit 30B. For example, the plurality of battery cells 100 included in the second cell unit 30B may include the cathode tabs 131 positioned on the right side of the second cell unit 30B and the anode tabs 132 positioned on the left side of the second cell unit 30B.

The plurality of battery cells 100 included in the first cell unit 30A may be connected in parallel. The plurality of battery cells 100 included in the second cell unit 30B may be connected in parallel. The first cell unit 30A and the second cell unit 30B may be connected in series.

The firewall 200 may be positioned outside the cell assembly 20. The firewall 200 may be arranged between two adjacent cell assemblies 20 among the plurality of cell assemblies 20. The firewall 200 may be arranged between two adjacent cell units 30A and 30B among the plurality of cell units 30A and 30B. The two adjacent cell units 30A and 30B may be connected in series with one firewall 200 interposed therebetween.

When the plurality of battery cells 100 are connected in parallel, if a fire occurs in one battery cell 100 to cause a short circuit thereof, a chain reaction of explosions may occur in the remaining battery cells 100 connected in parallel with the short-circuited battery cell 100. Since the two adjacent cell units 30A and 30B are connected in series with each other, even if a fire occurs in one of the two adjacent cell units 30A and 30B to cause an electrical short-circuit, the chain reaction of explosions caused by the short-circuit may be prevented.

The firewall 200 may include a main body 210. The main body 210 may be formed to extend in a direction parallel to the longitudinal direction of the battery cell 100. A width direction of the main body 210 may correspond to a direction parallel to the width direction of the battery cell 100. The main body 210 may be arranged to face the battery cell 100 in the direction in which the battery cells 100 are stacked. A thickness direction of the main body 210 may correspond to a direction parallel to the direction in which the battery cells 100 are stacked. A thickness direction of the firewall 200 may correspond to a direction parallel to the thickness direction of the main body 210.

The main body 210 may include an extension part 220. The extension parts 220 may be formed on one side and the other side of the main body 210, respectively. For example, the one side and the other side of the main body 210 may correspond to the left side and the right side of the main body 210, respectively. The extension part 220 may be formed to extend in the thickness direction of the main body 210. The extension part 220 may be formed thicker than the main body 210 to improve the rigidity of the firewall 200. In addition, due to the extension part 220, a portion where the firewall 200 is coupled to the side plate 300 may be more firmly protected.

The extension part 220 may be in contact with the exterior material 120 of the battery cell 100. The extension part 220 may be in contact with the electrode tab 130 of the battery cell 100.

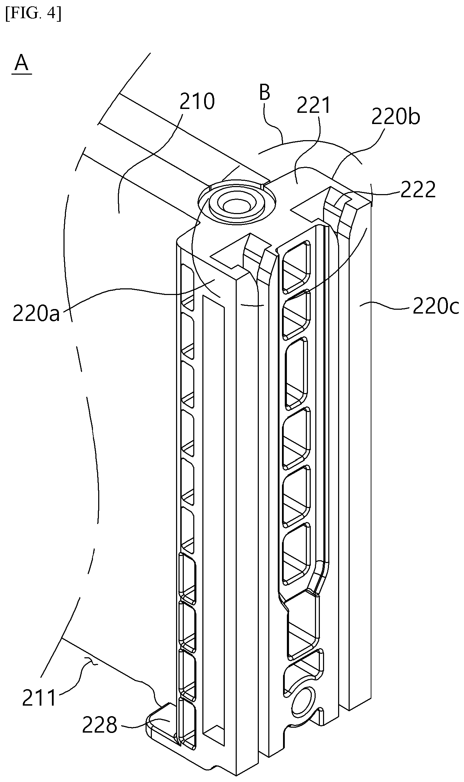

FIG. 4 is an enlarged view of part A in FIG. 3. FIG. 4 is a view shown by enlarging the other side of the one side and the other side of the firewall 200. For example, the one side and the other side of the firewall 200 may correspond to the left side and the right side of the firewall 200, respectively. The firewall 200 may have a shape that is symmetrical in the longitudinal direction of the firewall 200. Accordingly, the extension part 220 formed on the other side of the firewall 200 may be formed in a shape symmetrical in the longitudinal direction of the firewall 200 with the extension part 220 formed on the one side of the firewall 200.

Hereinafter, it will be described based on the other side of the firewall 200.

The main body 210 may have an opening 211 formed in a lower portion thereof. The opening 211 may be formed while being open in the thickness direction of the firewall 200. A cooling member may be installed through the opening 211 to cool the lower portions of the plurality of battery cells 100. The cooling member may be in contact with the lower portions of the plurality of battery cells 100 and the upper surface of the second cover plate 420. The opening 211 may be closed by the cooling member. This may prevent flames and debris from spreading through the lower portion of the firewall 200 when a fire occurs in the battery cells 100.

The extension part 220 may be formed to extend in the thickness direction of the firewall 200. The thickness direction of the extension part 220 may correspond to a direction parallel to the thickness direction of the firewall 200. For example, the extension part 220 may be formed to extend in the front and rear directions of the firewall 200. The extension part 220 may be formed to extend so as to contact the exterior material 120 of the battery cell 100.

The extension part 220 may include a first side surface 220a and a second side surface 220b formed on both sides in the thickness direction of the firewall 200, respectively. For example, the first side surface 220a may define a front side of the extension part 220, while the second side surface 220b may define a rear side of the extension part 220. The extension part 220 may include a third side surface 220c formed on the other side of the firewall 200. For example, the third side surface 220c may define a right side of the extension part 220.

The main body 210 is in contact with the exterior material 120 that surrounds the electrode assembly 110 of the battery cell 100, and the first side surface 220a and the second side surface 220b of the extension part 220 may each be in contact with the other side of the sealing part 121 of the exterior material 120. As a result, the firewall 200 may be in close contact with the battery cell 100 to fix the battery cell 100.

The extension part 220 may include a support part 221 formed by extending from the main body 210 to the other side of the firewall 200. The extension part 220 may include a coupling part 222 formed by extending from the support part 221 to the other side of the firewall 200. The longitudinal direction of the coupling part 222 may correspond to the extension direction of the coupling part 222 from the support part 221. The coupling part 222 may be coupled to the side plate 300 (see FIG. 1).

The first side surface 220a, the second side surface 220b and the third side surface 220c may include a series of holes. The series of holes may be spaced apart from each other in the width direction of the extension part 220. Due to the series of holes, the extension part 220 may be lightweight, and the torsional rigidity of the extension part 220 may be improved relative to a solid structure with the same mass. Due to the series of holes formed in the first side surface 220a and the second side surface 220b, a contact area between the extension part 220 and the battery cell 100 may be reduced. Due to the series of holes formed in the third side surface 220c, a contact area between the extension part 220 and the side plate 300 may be decreased, thereby reducing a frictional force generated between the extension part 220 and the side plate 300 during assembly.

The firewall 200 may include a support member 228 that connects a lower portion of the extension part 220 and a lower portion of the main body 210. The battery cell 100 may be positioned to contact an upper surface of the support member 228. The support member 228 may cause the battery cell 100 to be positioned with a gap from the second cover plate 420 (see FIG. 2). The cooling member may be installed between the battery cell 100 and the second cover plate 420.

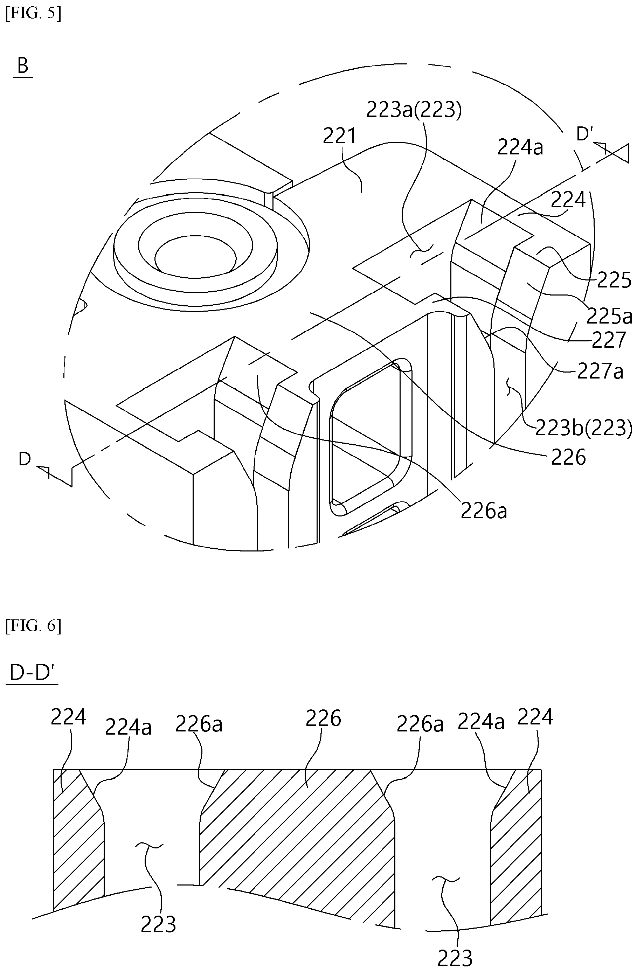

FIG. 5 is an enlarged view of part B in FIG. 4, and FIG. 6 is a view illustrating a cross-section of the firewall 200 of FIG. 5 taken on line D-D'.

The coupling part 222 may include a coupling groove 223 formed by recessing toward the main body 210 from the third side surface 220c of the extension part 220 (see FIG. 4). The coupling groove 223 may be formed by vertically penetrating through.

The coupling part 222 may include a plurality of coupling grooves 223. Hereinafter, the shape of the coupling part 222 will be described with a focus on the coupling groove 223 formed at the rear of the coupling part 222 among the plurality of coupling grooves 223. The coupling parts 222 may be formed symmetrically in the thickness direction of the extension part 220. Accordingly, the structure around the coupling groove 223 formed at the rear of the coupling part 222 may correspond to a structure symmetrical in the thickness direction of the extension part 220 with respect to the structure around the coupling groove 223 formed at the front of the coupling part 222.

The coupling part 222 may include a first fixing part 224. The first fixing part 224 may be formed on an outer side of the extension part 220 in the thickness direction of the extension part 220. The first fixing part 224 may be formed to extend from the outer side of the support part 221 to the other side of the firewall 200. For example, the first fixing part 224 may extend to the right from the rear of the support part 221. The longitudinal direction of the first fixing part 224 may correspond to the extension direction of the first fixing part 224 from the support part 221. The first fixing part 224 may be arranged on an outer side of the coupling groove 223 in the thickness direction of the extension part 220.

The first fixing part 224 may be formed to extend from the support part 221 corresponding to the length of the electrode tab 130 of the battery cell 100. The first fixing part 224 may be formed to protrude from the electrode tab 130 in the longitudinal direction of the first fixing part 224. As a result, the front or rear of the electrode tab 130 may be covered by the firewall 200. The firewall 200 may prevent a flame from being propagated to the front or rear of the electrode tab 130.

The first fixing part 224 may include a first fixing part inclined surface 224a formed on an upper side of the first fixing part 224. The first fixing part inclined surface 224a may be formed so that the cross-sectional area of the coupling groove 223 increases from the bottom toward the top. For example, the first fixing part inclined surface 224a may be formed so as to slope rearward with respect to the width direction of the firewall 200 from the bottom toward the top.

The coupling part 222 may include a first protrusion part 225. The first protrusion part 225 may be formed on the outer side of the first fixing part 224 in the longitudinal direction of the coupling part 222. The first protrusion part 225 may be formed to extend inwardly into the coupling groove 223, while extending in the thickness direction of the extension part 220. The first protrusion part 225 may include a first protrusion part inclined surface 225a formed on the upper side of the first protrusion part 225. The first protrusion part inclined surface 225a may be formed so that the cross-sectional area of the coupling groove 223 increases from the bottom toward the top. For example, the first protrusion part inclined surface 225a may be formed so as to slope toward the second side surface 220b from the bottom toward the top.

The coupling part 222 may include a second fixing part 226. The second fixing part 226 may be arranged between two first fixing parts 224 formed on both sides in the thickness direction of the extension part 220. The second fixing part 226 may be formed to extend from one point of the support part 221 to the other side of the firewall 200. For example, the second fixing part 226 may be formed to extend to the right from one point of the support part 221.

The second fixing part 226 may be arranged between two adjacent coupling grooves 223 among the plurality of coupling grooves 223. The second fixing part 226 may be arranged to face the first fixing parts 224. The second fixing part 226 may face the first fixing parts 224 with the coupling grooves 223 interposed therebetween. For example, the second fixing part 226 may extend to the right from a center of the support part 221.

The second fixing part 226 may include a second fixing part inclined surface 226a formed on an upper side of the second fixing part 226. The second fixing part inclined surfaces 226a may each be formed on both sides of the second fixing part 226 in the thickness direction of the extension part 220. The second fixing part inclined surface 226a may be formed so that the cross-sectional area of the coupling groove 223 increases from the bottom toward the top. For example, the second fixing part inclined surface 226a may be formed so as to slope away from the first fixing part 224, which faces the second fixing part 226, from the bottom toward the top.

Unlike the above-described configuration, the coupling part 222 may include a plurality of second fixing parts 226. One second fixing part 226 of the plurality of second fixing parts 226 may be arranged to face another second fixing part 226 adjacent to the one second fixing part 226. The one second fixing part 226 may face the other second fixing part 226 with the coupling groove 223 interposed therebetween. For example, the second fixing part inclined surface 226a may be formed so as to slope away from the other second fixing part 226, which faces the one second fixing part 226, from the bottom toward the top.

The coupling part 222 may include a second protrusion part 227. The second protrusion part 227 may be formed on the outer side of the second fixing part 226 in the longitudinal direction of the coupling part 222. The second protrusion part 227 may be formed to extend inwardly into the coupling groove 223, while extending in the thickness direction of the extension part 220. The second protrusion part 227 may face the first protrusion part 225. The second protrusion part 227 may include a second protrusion part inclined surface 227a formed on the upper side of the second protrusion part 227. The second protrusion part inclined surface 227a may be formed so that the cross-sectional area of the coupling groove 223 increases from the bottom toward the top. For example, the second protrusion part inclined surface 227a may be formed so as to slope away from the first protrusion part 225 from the bottom toward the top.

Since the cross-sectional area of the upper side of the coupling groove 223 becomes wider from the bottom toward the top due to the first fixing part inclined surface 224a, the first protrusion part inclined surface 225a, the second fixing part inclined surface 226a and the second protrusion part inclined surface 227a, the side plate 300 may be easily inserted into the coupling groove 223 during coupling.

The coupling groove 223 may include a first coupling groove 223a formed between the first fixing part 224 and the second fixing part 226. The coupling groove 223 may include a second coupling groove 223b formed between the first protrusion part 225 and the second protrusion part 227. The first coupling groove 223a may be in communication with the second coupling groove 223b. In the thickness direction of the extension part 220, the width of the first coupling groove 223a may be formed to be larger than the width of the second coupling groove 223b.

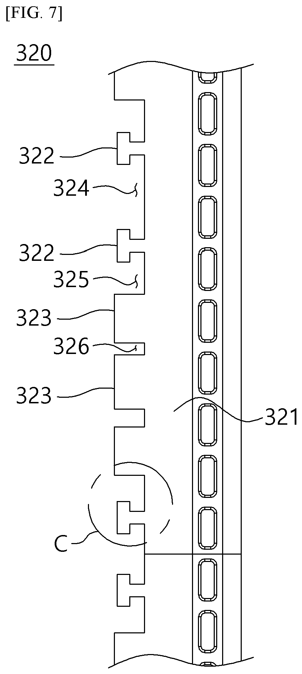

FIG. 7 is a view illustrating a portion of the second side plate 320 of FIG. 1. FIG. 7 is a plan view illustrating the second side plate 320. The second side plate 320 may be coupled to the other side of the firewall 200 shown in FIGS. 4 and 5. The second side plate 320 may be formed symmetrically with the first side plate 310 in the longitudinal direction of the battery cell 100. Hereinafter, it will be described based on the second side plate 320.

The second side plate 320 may include a plate main body 321. The plate main body 321 may be formed to extend in a direction parallel to the thickness direction of the battery cell 100. A width direction of the plate main body 321 may be formed in a direction parallel to the width direction of the battery cell 100.

The second side plate 320 may include coupling protrusions 322. The coupling protrusion 322 may be formed to extend from the plate main body 321 toward the firewall 200. A plurality of coupling protrusions 322 may be formed in the second side plate. The coupling protrusions 322 may be formed to correspond to the coupling grooves 223 of the firewall 200. The coupling protrusion 322 may be inserted into the coupling groove 223

The second side plate 320 may include partitions 323. The partition 323 may be formed to extend from the plate main body 321 toward the battery cell 100. A plurality of partitions 323 may be formed in the second side plate. The partition 323 may be formed to correspond to the shape of the other side of the battery cell 100 and the shape of the other side of the firewall 200.

The battery module 10 according to the present embodiment may each include the firewall 200 having two coupling grooves 223 formed on both sides. In correspondence with the shape of the firewall 200, the plurality of coupling protrusions 322 may include two coupling protrusions 322 arranged adjacent to each other. The battery module 10 according to the present embodiment may have four battery cells 100 arranged between the firewall 200 and the firewall 200. In correspondence with the number of battery cells 100, the plurality of partitions 323 may include three partitions 323 arranged adjacent to each other. That is, the two coupling protrusions 322 and the three partitions 323 may be arranged alternately on the second side plate 320.

A plurality of coupling protrusions 322 may be arranged spaced apart from each other. A first insertion groove 324 may be formed between two adjacent coupling protrusions 322 among the plurality of coupling protrusions 322. The first insertion groove 324 vertically penetrates through, and may be open toward the firewall 200. The second fixing part 226 (see FIG. 5) of the firewall 200 may be inserted into the first insertion groove 324 and coupled to the second side plate 320.

The coupling protrusions 322 and the partition 323 may be arranged spaced apart from each other. A second insertion groove 325 may be formed between adjacent coupling protrusion 322 and the partition 323. The second insertion groove 325 vertically penetrates through, and may be open toward the firewall 200 or the battery cell 100.

The first fixing part 224 of the firewall 200 (see FIG. 5) may be inserted into the second insertion groove 325, and coupled to the second side plate 320. The electrode tab 130 of the battery cell 100 may be inserted into the second insertion groove 325. The electrode tab 130 may be guided by the second insertion groove 325. If flames or debris escape through the portion where the electrode assembly 110 and the electrode tab 130 are coupled in the event of a fire within the battery module 10, some of them may enter the second insertion groove 325, thereby preventing the flame propagation.

The plurality of partitions 323 may be arranged spaced apart from each other. A third insertion groove 326 may be formed between two adjacent partitions 323 among the plurality of partitions 323. The third insertion groove 326 vertically penetrates through, and may be open toward the battery cell 100. The electrode tab 130 of the battery cell 100 may be inserted into the third insertion groove 326. The electrode tab 130 may be guided by the third insertion groove 326. If flames or debris escape through the portion where the electrode assembly 110 and the electrode tab 130 are coupled in the event of a fire within the battery module 10, some of them may enter the third insertion groove 326, thereby preventing the flame propagation.

The bus bar may be disposed so that it is exposed to the second insertion groove 325 and the third insertion groove 326, and may be connected to the electrode tab 130. The bus bar may be insert-molded into the first and second side plates 310 and 320, respectively.

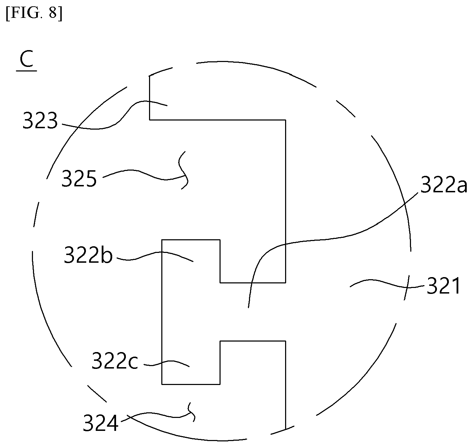

FIG. 8 is an enlarged view illustrating part C in FIG. 7. Hereinafter, the shape of the coupling protrusion 322 will be described. The coupling protrusion 322 illustrated in FIG. 8 may be inserted into the coupling groove 223 illustrated in FIG. 5. In other words, the coupling protrusion 322 illustrated in FIG. 8 may be inserted into the coupling groove 223 formed at the rear of the firewall 200.

The coupling protrusion 322 may include a connection member 322a formed to extend from the plate main body 321 toward the firewall 200. The coupling protrusion 322 may include a first engagement part 322b formed by extending from an end of the connection member 322a into the second insertion groove 325. The coupling protrusion 322 may include a second engagement part 322c formed by extending from an end of the connection member 322a into the first insertion groove 324. The first engagement part 322b and the second engagement part 322c of the coupling protrusion 322 may be inserted into the first coupling groove 233a (see FIG. 5) of the firewall 200.

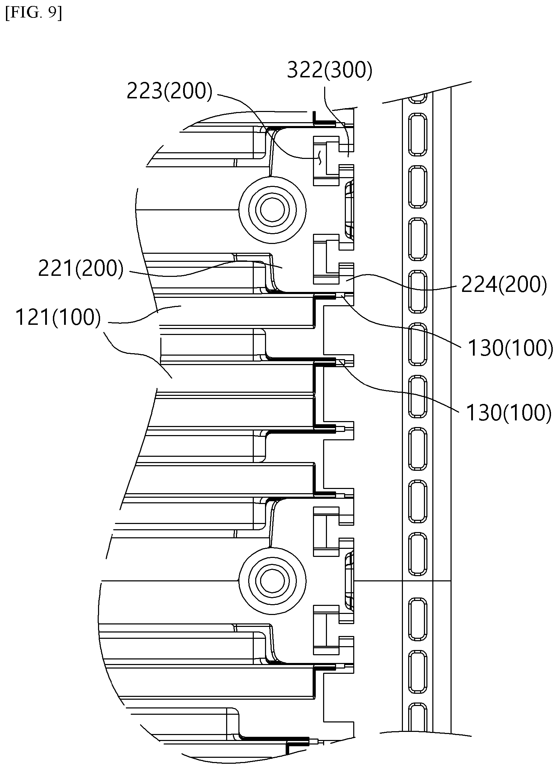

FIG. 9 is an enlarged view illustrating the other side (right) of FIG. 1.

When the coupling protrusion 322 is inserted into the coupling groove 223, the coupling protrusion 322 may not fall out in the longitudinal direction of the firewall 200 due to the shapes of the coupling protrusion 322 and the coupling groove 223. Accordingly, even if an explosion occurs due to fire within the battery module 10, the firewall 200 and the side plate 300 may protect the battery cell 100 up to the portion where the electrode tab 130 is formed. In addition, the fire propagation through the firewall 200 may be prevented.

Since the support part 221 and the first fixing part 224 of the firewall 200 are in contact with the sealing part 121 of the battery cell 100, the battery cell 100 may be fixed and supported by the firewall 200. Accordingly, the battery cell 100 may be fixed and supported by the firewall 200 and the side plate 300 without a separate fixing case for the battery cell 100, thereby minimizing the volume of the battery module 10.

The contents described above are merely examples of applying the principles of the present disclosure, and other configurations may be further included without departing from the scope of the present disclosure.

## Claims

1. A battery module comprising:
a plurality of cell assemblies, each comprising a plurality of cell units connected in series with each other; and
a firewall disposed between two adjacent cell assemblies among the plurality of cell assemblies,
wherein each of the plurality of cell units comprises a plurality of battery cells connected in parallel with each other.

2. The battery module according to claim 1, wherein each of the plurality of battery cells comprises:
an electrode assembly formed by extending from one end to the other end;
an exterior material that at least partially surrounds the electrode assembly;
a cathode tab formed by protruding from the one end of the electrode assembly; and
an anode tab formed by protruding from the other end of the electrode assembly.

3. The battery module according to claim 2, wherein each of the plurality of cell units comprises a plurality of battery cells, which are stacked so that the cathode tabs face each other and the anode tabs face each other.

4. The battery module according to claim 3, wherein the plurality of cell units are arranged so that the cathode tabs and the anode tabs of two adjacent cell units face each other.

5. The battery module according to claim 1, wherein each of the plurality of cell units comprises the plurality of battery cells provided in an even number.

6. The battery module according to claim 1, wherein the battery module comprises a second firewall disposed on the outermost side of the plurality of cell assemblies.

7. The battery module according to claim 2, further comprising a first side plate disposed adjacent to the one end of the electrode assembly and coupled to the first firewall; and
a second side plate disposed adjacent to the other end of the electrode assembly and coupled to the first firewall.

8. The battery module according to claim 7, wherein the first firewall comprises:
a main body formed by extending from one end to the other end; and
extension parts formed by extending in a direction parallel to a direction in which the plurality of battery cells are stacked from each of the one end and the other end of the main body,
wherein the extension parts are coupled to the first and second side plates,

9. The battery module according to claim 8, wherein the extension part is formed by extending from the one end and the other end of the main body, respectively, and protrudes beyond the cathode tab and the anode tab in a longitudinal direction of the main body.

10. The battery module according to claim 8, wherein the exterior material comprises a sealing part formed by contacting the inner side of the exterior material along a periphery of the electrode assembly.

11. The battery module according to claim 10, wherein an upper side of the sealing part is folded in a direction away from the first firewall adjacent to the sealing part.

12. The battery module according to claim 10, wherein the extension part is in contact with one side or the other side of the sealing part, and is disposed adjacent to the cathode tab or the anode tab.

13. The battery module according to claim 8, wherein the extension part comprises a coupling groove which is open toward the first and second side plates.

14. The battery module according to claim 13, wherein the upper side of the coupling groove is formed so that a cross-sectional area increases from the bottom toward the top.

15. The battery module according to claim 13, wherein each of the first and second side plates comprises a coupling protrusion formed by extending from each of the first and second side plates, and inserted into the coupling groove.

16. The battery module according to claim 15, wherein the coupling groove comprises:
a first coupling groove; and
a second coupling groove in communication with the first coupling groove, and arranged on an outside in the longitudinal direction of the first firewall,
wherein a width of the second coupling groove in a front-back direction is formed shorter than a width of the first coupling groove in the front-back direction.

17. The battery module according to claim 16, wherein the coupling protrusion comprises:
a connection member formed by extending from each of the first and second side plates; and
first and second engagement parts formed by extending back and forth from an end of the connection member,
wherein the first and second engagement parts are inserted into the first coupling groove.

18. The battery module according to claim 8, wherein each of the first and second plates comprises an insertion groove into which the extension part and at least one of the cathode tab and the anode tab are inserted.

19. The battery module according to claim 1, further comprising:
a first cover plate disposed adjacent to an upper end of the first firewall; and
a second cover plate disposed adjacent to a lower side of the first firewall.

20. The battery module according to claim 19, further comprising: a cooling member arranged between the plurality of cell assemblies and the second cover plate.
